Europäisches Patentamt

European Patent Office

Office européen des brevets

(19)

(11) Veröffentlichungsnummer: **0 268 803 B1**

# EUROPÄISCHE PATENTSCHRIFT

(45) Veröffentlichungstag der Patentschrift: **06.11.91**

(51) Int. Cl.⁵: **B23K 7/10**

(21) Anmeldenummer: **87114999.3**

(22) Anmeldetag: **14.10.87**

(54) **Kreuzwagen-Brennschneidmaschine.**

(30) Priorität: 06.11.86 DE 3637862

(43) Veröffentlichungstag der Anmeldung:
01.06.88 Patentblatt 88/22

(45) Bekanntmachung des Hinweises auf die
Patenterteilung:
06.11.91 Patentblatt 91/45

(84) Benannte Vertragsstaaten:
FR GB IT

(56) Entgegenhaltungen:
EP-A- 0 016 466
GB-A- 1 414 437

BÄNDER BLECHE ROHRE, Band 15, Nr. 1,
1974, Seiten 9-14, Düsseldorf; L. LEISEDER
"Automatisches Brennschneiden von Blechen"

O. LIMANN "Elektronik ohne Ballast", 5. Auflage 1978, Francis-Verlag Gmbh, München;

(73) Patentinhaber: **MESSER GRIESHEIM GMBH**
**Hanauer Landstrasse 330**
**W-6000 Frankfurt/Main(DE)**

(72) Erfinder: **Debus, Günter**
**Uhlandstrasse 5**
**W-6455 Erlensee(DE)**
Erfinder: **Schumann, Günter**
**Dreieichstrasse 20**
**W-6074 Rödermark(DE)**
Erfinder: **Huor, Te Vin**
**10 Rue des Marronniers**
**F-91000 Bondoufle(FR)**

**Beschreibung**

Die Erfindung betrifft eine Kreuzwagen-Brennschneidmaschine bestehend aus einem auf Laufbahnen fahrenden Längswagen und auf dessen Träger verfahrbarer Brenneraufhängung, an der eine Regeleinrichtung zum Regeln der Brennerhöhe befestigt ist, wobei die Regeleinrichtung einen mit einem Meßkreis verbundenen Sensor aufweist, der Änderungen in der Höhe des Brenners erfaßt, welche mit einem am Sollwertgeber eingestellten Sollwert verglichen und die so ermittelten Abweichungen in der Höhe einem Regler eingespeist werden, der in Abhängigkeit davon Stellsignale an ein den Brenner verfahrbares Stellglied abgibt und mit einer Schalttafel zum Steuern der Brennerhöhe, die vorzugsweise am Längswagen angeordnet ist, wobei die Schalttafel einen ersten Steuerschalter zum Öffnen bzw. Schließen der Verbindung zwischen Meßkreis und Stellglied und zweite an das Stellglied angeschlossene Steuerschalter aufweist, deren in Abhängigkeit von Fuhrungsgrößen, insbesondere der Zeitdauer ihrer Bestätigung erzeugten Stellgrößen dem Stellglied eingespeist werden, das in Abhängigkeit hiervon den Brenner in der Höhe verfährt.

Bei einer bekannten Kreuzwagen-Brennschneidmaschine wird der Abstand zwischen dem am Träger befestigten Brenner und einer Werkstückoberfläche durch eine kapazitive Regeleinrichtung (Bänder, Bleche, Rohre, Band 15, Nr. 1, 1974, Seiten 9 - 14, Düsseldorf, L. Leiseder, "Automatisches Brennschneiden von Blechen") konstant gehalten. Damit kurze Signalwege zwischen dem die Abstandsänderungen erfaßenden, von einer Abtastelektrode und der Werkstückoberfläche gebildeten Sensor erreicht und Störgrößen vermieden werden, ist die kapazitive Regeleinrichtung auf der Brenneraufhängung befestigt. Der kapazitive Sollwert wird mit Hilfe eines am Reglergehäuse angeordneten Sollwertgebers bei über der Werkstückoberfläche angeordneter Abtastelektrode direkt am jeweiligen Brennerstandort eingestellt. Zusätzlich weist diese Kreuzwagen-Brennschneidmaschine eine in der Regel auf den Radkästen des Laufwagens angeordnete Schalttafel mit Steuerschaltern zum Bedienen der Maschine auf. Mit den hier angeordneten Steuerschaltern "Auf", "Ab", "Automatik Ein" kann der Brenner auf einen größeren (Auf) oder kleineren (Ab) Abstand zur Werkstückoberfläche verfahren werden und die kapaazitive Regeleinrichtung ein- bzw. ausgeschaltet werden.

Nachteilig ist hierbei, daß die Abtasthöhe der kapazitiven Regeleinrichtung nicht von der Schalttafel aus einstellbar ist. Tritt die Abtastelektrode über den Rand des Werkstückes hinaus, oder wird das Dielektrikum zwischen Abtastelektrode und Werkstückoberfläche durch die Flamme gestört, resultieren daraus Kapazitätsänderungen, welche zu einer falschen Einstellung des Abstands zwischen Düse und Werkstück fuhren können. Eine Neueinstellung der Abtasthöhe ist in der Praxis nahezu unmöglich, da die Brenneraufhängung nicht mehr in Reichweite des Bedienungsmannes ist.

Weiterhin ist aus der EP-A1-00 16 466 eine Brennerhöhensteuerung bekannt, bei der aus Widerstandsänderungen der Flamme ein Brennerhöhen-Ist-Signal gewonnen wird, welches mit einem Brennerhöhen-Soll-Signal verglichen und in Abhängigkeit von dem Vergleich die Brennerhöhe geregelt wird. Das Brennerhöhen-Soll-Signal wird durch Verfahren des Brenners auf eine Sollhöhe mittels an einer Schalttafel vorgesehener Schalter gebildet.

In der GB-A-14 14 437 wird zwischen Werkstück und Brenner eine Spannung angelegt, wobei Flammenwiderstandsänderungen ebenfalls als Brennerhöhen-Soll-Signal verwendet werden. Das Brennerhöhen-Soll-Signal wird mittels Potentiometer eingestellt.

Ferner sind aus O. Limann "Elektronik ohne Ballast", 5. Auflage 1978, Franzis-Verlag GmbH, München, Seiten 265, 290, 291, 322, 323 Anzeigeeinrichtungen, Digitale und duale Zähltechniken und Digital/Analog-Umsetzer bekannt.

Der Erfindung liegt die Aufgabe zugrunde, eine Kreuzwagen-Brennschneidmaschine zu schaffen, bei der die Abtasthöhe von der vorzugsweise am Längswagen befindlichen Schalttafel einstellbar ist.

Ausgehend von dem im Oberbegriff des Anspruchs 1 berücksichtigten Stand der Technik wird diese Aufgabe durch die kennzeichnenden Merkmale des Anspruchs 1 gelöst.

Die durch die Erfindung erreichten Vorteile sind im wesentlichen darin zu sehen, daß der Sollwert der kapazitiven Regeleinrichtung nunmehr auch von der Schalttafel aus veränderbar ist. Um optimale Schneidergebnisse zu erzielen, muß der Bedienungsmann nicht über die zum Teil geschnittenen noch heißen Blechtafeln hinweg zu der Brenneraufhängung gehen. Dadurch, daß die bereits vorhandenen Steuerschalter, die vorzugsweise als Taster ausgebildet sind, mit einer Doppelfunktion belegt werden, müssen keine zusätzlichen Bedienelemente an der Schalttafel vorgesehen werden. Eine Zusatzverdrahtung von der Schalttafel zu der am Träger verfahrbar angeordneten Brenneraufhängung mit dem Brenner kann entfallen. Die Verbindung des Steuerschalters mit dem Sollwertgeber des Meßkreises erfolgt vorteilhaft über eine in der Regeleinrichtung integrierte Ferneinstellungs-Platine mit einem Vor-/Rückwärtszähler. Der Zähler wird durch Impulse angesteuert, die beim Betätigen der in der Schalttafel vorhandenen Auf/Abtaster erzeugt werden. Das Ausgangssignal des Zählers verschiebt den Nullpunkt des Sollwertgebers in der kapazitiven Regeleinrichtung. Jedes Antippen bedeutet einen Schritt "Auf" bzw. "Ab" von der am Sollwertgeber eingestellten Abtasthöhe. Eine rote bzw. grüne Leuchtdiode zeigt an, ob der Nullpunkt nach Plus oder Minus verschoben ist. Wird der Taster länger betätigt, so fährt die Brenneraufhängung wie bei der bekannten Brennschneidmaschine "Auf" oder "Ab".

Vorteilhaft bleibt die ursprünglich am Sollwertgeber eingestellte Abtasthöhe erhalten und kann durch Tippbetrieb bis zum Erlöschen der Leuchtdioden wieder erreicht werden. Über eine manuelle Umschaltung von der Fernregelung mit kapazitiver Regelung auf kapazitiven Regelbetrieb erfolgt ein Nullsetzen der eingegebenen Korrekturwerte, d. h. eine Änderung des ursprünglich eingestellten Sollwertes, um den am Ende eines Brennschnittes anstehenden Korrekturwert.

Vorteilhaft sind die von dem Taster an der Schalttafel ausgelösten Veränderungen in der Abtasthöhe nicht linear sondern erzeugen bei größerem Abstand der Abtastelektrode zum Werkstück größere Veränderungen und bei kleiner werdendem Abstand geringere Veränderungen in der Abtasthöhe.

Ein Ausführungsbeispiel der Erfindung ist in der Zeichnung dargestellt und wird im folgenden näher beschrieben.

Es zeigen:

Fig. 1     eine     Kreuzwagen-Brennschneidmaschine mit einem Blockschaltbild der Fernverstellung;

Fig. 2     eine Schaltbild der Ferneinstellung.

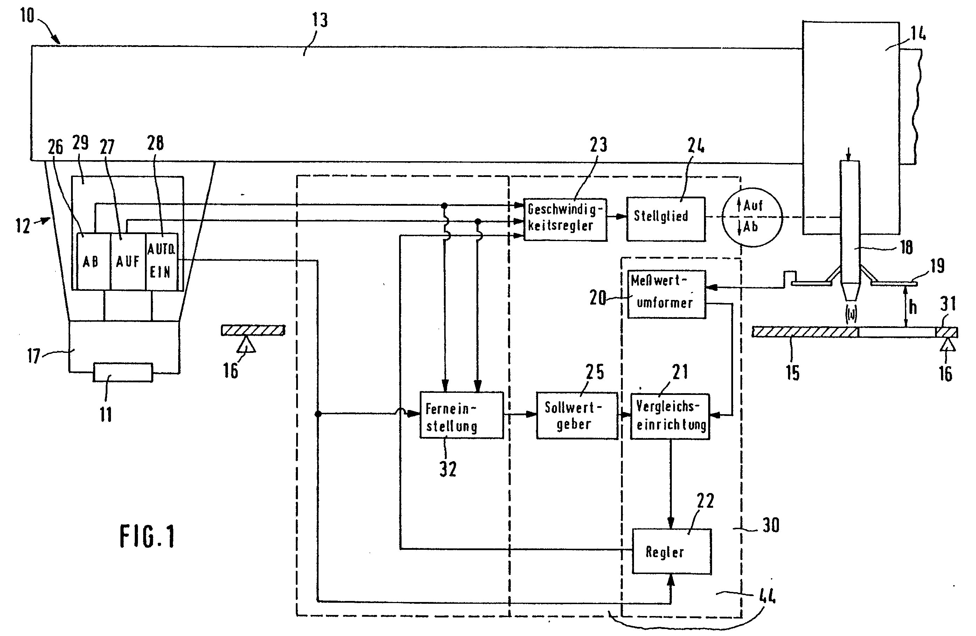

In Fig. 1 ist schematisch eine Kreuzwagen-Brennschneidmaschine 10 dargestellt, die im wesentlichen aus einem auf Laufbahnen 11 fahrenden Längswagen 12 besteht, auf dessen Träger 13 eine Brenneraufhängung 14 quer zur Verfahrrichtung des Längswagens verfahrbar ist. Unterhalb des Trägers 13 sind die zu schneidenden Werkstücke 15, insbesondere Blechtafeln, auf einem nur schematisch dargestellten Schneidtisch 16 angeordnet. Der Träger 13 ist auf jeweils einen Radkasten 17 montiert. Der an der Brenneraufhängung 14 befestigte Brenner 18 der Kreuzwagen-Brennschneidmaschine 10 wird durch einen nicht dargestellten Koordinatenantrieb in Richtung der Laufbahnen 11 und des Trägers 13 über das Werkstück 15 verfahren. Auf bzw. an der Brenneraufhängung 14 ist eine kapazitive Regeleinrichtung 44 befestigt. Ein als kapazitive Abtastelektrode ausgebildeter Sensor 19 ermittelt dabei laufend den Abstand zwischen Brenner 18 und Werkstück 15 und gibt derart Sensor-Signale über einen Meßwertumformer 20 und eine Vergleichseinrichtung 21 an einen Regler, 22 ab, daß dieser durch Beaufschlagung des Geschwindigkeitsreglers 23 eines Stellgliedes 24 mit Stellsignalen den vorgewählten, für den Schneidvorgang erforderlichen Abstand h auch bei Unebenheiten des Werkstücks 15 konstant hält. Der Betrag des Abstands h ist dabei durch einen ebenfalls an die Vergleichseinrichtung 21 angeschlossenen Sollwertgeber 25 einstellbar.

Der Geschwindigkeitsregler 23 des Stellgliedes 24 ist weiterhin mit vorzugsweise als Taster ausgebildeten Steuerschaltern 26, 27, 28 verbunden. Die Steuerschalter 26, 27, 28 sind an einer nur schematisch dargestellten Schalttafel 29 angeordnet, die wahlweise links oder rechts vom Arbeitsbereich auf den Radkästen 17 angeordnet ist. Selbstverständlich ist es auch möglich, die Schalttafel 29 ortsfest neben der Kreuzwagen-Brennschneidmaschine 10 anzuordnen. Durch Betätigen des Steuerschalters 28 kann der aus Meßwertumformer 20, Vergleichseinrichtung 21 und Regler 22 bestehende Meßkreis 30 ein- bzw. abgeschaltet werden. Mit den Steuerschaltern 26 bzw. 27 kann der Geschwindigkeitsregler 23 des Stellgliedes 24 beaufschlagt werden und der Brenner 18 unabhängig von dem Meßkreis 30, d. h. unabhängig von der Schaltfunktion/"Automatik Ein" bzw. "Aus" mit der Hand aufwärts bzw. abwärts verfahren werden. Dies ist beispielsweise während des Brennschneidens bei der Schaltfunktion "Automatik Ein" dann erforderlich, wenn sich ein ausgeschnittenes Teil auf dem Schneidtisch hochstellt, so daß es durch Betätigen des Auf-Steuerschalters 27 mit der Hand von dem Brenner 18 "übersprungen" werden kann. Wird dieser Steuerschalter 27 nicht mehr betätigt, dan stellt der Sensor 19 den Brenner 18 wieder auf die voreingestellte Abtasthöhe.

Verfährt der Brenner 18 beispielsweise parallel zu bereits ausgeschnittenen Bauteilen, dann befindet sich der Sensor 19 teilweise nicht mehr über dem Werkstück 15. Es kommt zu Kapazitätsänderungen zwischen Sensor 19 und Werkstückoberfläche 31, so daß der Sensor 19 ein Signal an die Vergleichseinrichtung 21 abgibt, welches den Regler 22 zu einer eine Annäherung des Brenners 18 bewirkenden Abgabe von Stellsignalen an den Geschwindigkeitsregler 23 des Stellgliedes 24 veranlaßt. Es werden von dem Brenner 18 in Folge Brennschnitte mit schlechter Qualität der Schnittkanten ausgeführt.

Zur Vermeidung einer derartigen Beeinträchtigung der Schnittqualität sind die Steuertaster 26, 27, 28 mit einer doppelten Schaltfunktion belegt; sie sind mit einer Ferneinstellung 32 verbunden, die an den Sollwertgeber 25 angeschlossen ist.

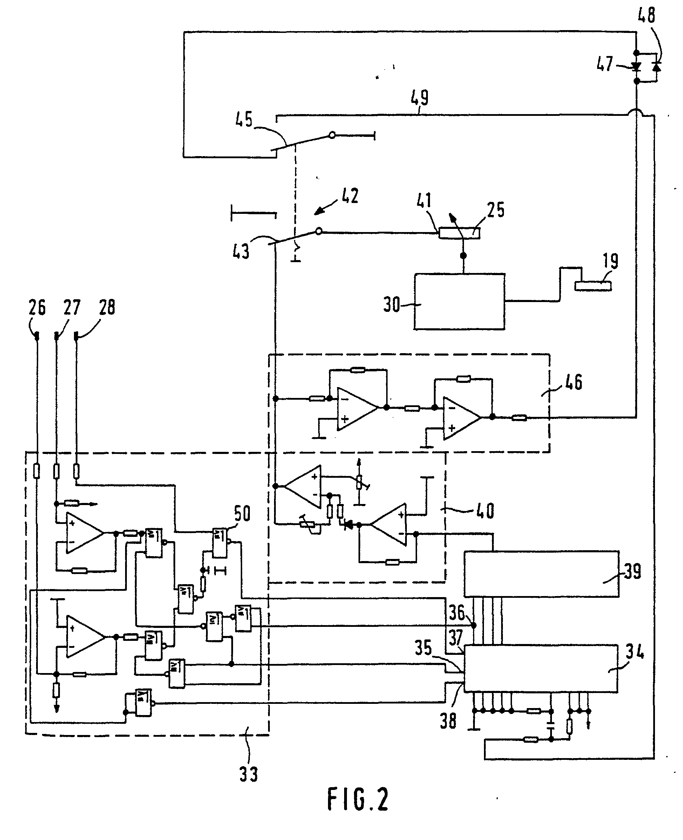

In der Fig. 2 ist ein Schaltplan der Ferneinstellung 32 dargestellt, in dem gleiche Bauteile mit gleichen Bezugsziffern bezeichnet sind. Die Steuerschalter 26, 27, 28 sind über ein im wesentlichen aus NOR-Gliedern aufgebautes Logikglied 33 mit einem Vorwärts-/Rückwärtszähler 34 verbunden. Das Rückswärtszählen erfolgt durch Antippen des Steuerschalters 26, das Vorwärtszählen durch Antippen des Steuerschalters 27. Mit der Bezugsziffer 37 ist der Zählimpulseingang des Vorwärts-/Rückwärtszählers 34, bezeichnet. Über das NOR-Glied 49 wird der Vorwärts-/Rückwärtszähler 34 beim Automatik-Aus-Betrieb verriegelt, so daß beim Betätigen der Steuerschalter "Ab", "Auf" die Zählereinstellung nicht veränderbar ist. Durch Betätigen des Steuerschalters 28 ("Automatik-Ein") wird das NOR-Gleid 49 durchgeschaltet unnd der Zählimpulseingang 37 des Vorwärts-/Rückwärtszählers 34 freigegeben, so daß dem Sollwert eine Steuergröße, insbesondere eine Steuerspannung, aufschaltbar ist.

Über den Ausgang 35 des Vorwärts-/Rückwärtszählers 34 erhält das Logikglied immer dann eine Rückmeldung, wenn der Vorwärts-/Rückwärtszähler 34 seinen oberen oder unteren maximalen Zählerstand erreicht hat. Der Ausgang 35 ist in beiden Fällen Null. Über den Ausgang 36 erfolgt die Rückmeldung an das Logikglied 33 ob es sich um den oberen oder unteren maximalen Zählerstand handelt. Durch das Logikglied wird daraufhin die Impulsabgabe der Steuerschalter 26 oder 27 gesperrt, wodurch ein Umkippen des Vorwärts-/Rückwärtszählers 34 vom beispielsweise obersten Maximalwert des Zählers auf den untersten Wert verhindert wird.

Über den Eingang 38 erfolgt die Umschaltung der Zählrichtung des Vorwärts-/Rückwärtszählers 34.

Der Vorwärts-/Rückwärtszähler 34 ist mit einem Digital-Analogwandler 39 verbunden, der über einen Verstärker 40 an den Anschluß des vorzugsweise als Potentiometer ausgebildeten Sollwertgebers 25 angeschlossen ist. Zwischen Sollwertgeber 25 und Digital-Analog-Wandler 39 ist ein manuell betätigbarer Doppelschalter 42 angeordnet, mit dessen ersten Schaltkontakt 43 die Ferneinstellung 32 von der Kapazitiven Regeleinrichtung 44 (Fig. 1) trennbar ist. Gleichzeitig wird über den zweiten Schaltkontakt 45, die mit dem Ausgangssignal unter Zwischenschaltung einer Verstärkereinheit 46 beaufschlagten Anzeigeelemmente 47, 48, insbesondere Leuchtdioden, die den Zählerstand unterhalb oder oberhalb der Grundeinstellung des Sollwertgebers 25 anzeigen, kurzgeschlossen und über eine Rückführleitung 49 der Vorwärts-/Rückwärtszähler 34 auf Null gestellt.

**Patentansprüche**

1. Kreuzwagen-Brennschneidmaschine (10), bestehend aus einem auf Laufbahnen (11) fahrenden Längswagen (12) und auf dessen Träger (13) verfahrbarer Brenneraufhängung (14), an der eine Regeleinrichtung (44) zum Regeln der Brennerhöhe befestigt ist, wobei die Regeleinrichtung (44) einen mit einem Meßkreis verbundenen Sensor (19) aufweist, der Änderungen in der Höhe des Brenners (18) erfaßt, welche mit einem am Sollwertgeber (25) eingestellten Sollwert verglichen und die so ermittelten Abweichungen in der Höhe einem Regler (22) eingespeist werden, der in Abhängigkeit davon Stellsignale an ein den Brenner (18) verfahrbares Stellglied (24) abgibt und mit einer Schalttafel (29) zum Steuern der Brennerhöhe, die vorzugsweise am Längswagen (12) angeordnet ist, wobei die Schalttafel einen ersten Steuerschalter (28) zum Öffnen bzw. Schließen der Verbindung zwischen Meßkreis und Stellglied (24) und zweite an das Stellglied angeschlossene Steuerschalter (26, 27) aufweist, deren in Abhängigkeit von Führungsgrößen, insbesondere der Zeitdauer ihrer Betätigung, erzeugten Stellgrößen dem Stellglied (24) eingespeist werden, das in Abhängigkeit hiervon den Brenner (18) in der Höhe verfährt, dadurch gekennzeichnet, daß die in der Schalttafel (29) angeordneten Steuerschalter (26, 27, 28) zur Fernverstellung des Sollwertes vorgesehen sind.

2. Kreuzwagen-Brennschneidmaschine nach Anspruch 1, dadurch gekennzeichnet, daß die Schalter (26, 27, 28) als Taster ausgebildet sind.

3. Kreuzwagen-Brennschneidmaschine nach Anspruch 1 oder 2, dadurch gekennzeichnet, daß die zweiten Steuerschalter (26, 27) unter Zwischenschaltung einer in der Regeleinrichtung integrierten Ferneinstellung (32) mit dem Sollwertgeber (25) des Meßkreises (30) verbunden sind und durch Betätigen der Steuerschalter (26, 27, 28) dem Sollwert eine Steuergröße, insbesondere eine Steuerspannung, aufschaltbar ist.

4. Kreuzwagen-Brennschneidmaschine nach einem der Ansprüche 1 bis 3, dadurch gekennzeichnet, daß die Ferneinstellung (32) ein Logikglied (33) aufweist, dessen Eingänge mit den Steuerschaltern (26, 27, 28) und dessen Ausgänge mit einem Zähler (34) verbunden sind und beim Betätigen der zweiten Steuerschalter (26, 27) jeweils ein Zählimpuls erzeugt wird, der den Zähler (34) vorwärts oder rückwärts setzt, welcher dann unter Zwischenschaltung eines mit dem Sollwertgeber (25) verbundenen Digital-Analog-Wandlers (39) die Steuergröße abgibt, welche den Nullpunkt des Sollwertgebers (25) nach Plus oder Minus verschiebt.

5. Kreuzwagen-Brennschneidmaschine nach einem der Ansprüche 1 bis 4,
dadurch gekennzeichnet,
daß der Digital-Analog-Wandler (39) mit einer Anzeigeeinheit (47, 48) insbesondere Leuchtdioden, verbunden ist, welche das Verschieben des Nullpunktes nach Plus oder Minus anzeigt.

6. Kreuzwagen-Brennschneidmaschine nach einem der Ansprüche 1 bis 5,
dadurch gekennzeichnet,
daß zwischen Digital-Analog-Wandler (39) und Sollwertgeber (25) ein erster Schalter (42, 43) angeordnet ist, mit dem die Ferneinstellung (32) von der kapazitiven Regeleinrichtung (44) trennbar und ein zweiter Schalter (42, 45) schaltbar ist, welcher den Zähler (34) und die Anzeigeeinheit (47, 48) löscht.

7. Kreuzwagen-Brennschneidmaschine nach einem der Ansprüche 1 bis 6,
dadurch gekennzeichnet,
daß die Steuergröße in Abhängigkeit von der Höhe des Sensors (19) zum Werkstück (15) vergrößert bzw. verkleinert ist, so daß bei kleiner werdendem Abstand h pro Zählimpuls eine kleinere Höhenkorrektur erfolgt.

8. Kreuzwagen-Brennschneidmaschine nach einem der Ansprüche 1 bis 7,
dadurch gekennzeichnet,
daß der erste Steuerschalter (28) unter Zwischenschaltung des Logikgliedes (33) mit dem Zähler (34) verbunden ist und durch Betätigen den Zählerimpulseingang (37) des Zählers (34) freigibt.

## Claims

1. Compound-carriage flame-cutting machine (10), consisting of a longitudinal carriage (12) travelling on tracks (11) and a torch attachment (14) which is moveable on the supporting beam (13) of the longitudinal carriage (12) and to which a regulating device (44) for regulating the torch height is fastened, the regulating device (44) having a sensor (19) which is connected to a measuring circuit and detects changes in the height of the torch (18), which changes are compared with a reference input set at the reference element (25) and deviations in the height which are thus determined are fed to a regulator (22) which, as a function thereof, transmits controlling signals to a final control element (24) which can move the torch (18), and having a control panel (29) for controlling the torch height, which control panel (29) is preferably arranged on the longitudinal carriage (12), the control panel having a first control switch (28) for opening or closing the connection between measuring circuit and final control element (24) and second control switches (26, 27) attached to the final control element, the manipulated variables of which switches (26, 27), produced as a function of command variables, in particular of the duration of their actuation, are fed to the final control element (24), which vertically moves the torch (18) as a function thereof, characterised in that the control switches (26, 27, 28) arranged in the control panel (29) are provided for the remote adjustment of the reference input.

2. Compound-carriage flame-cutting machine according to Claim 1, characterised in that the switches (26, 27, 28) are designed as pushbutton switches.

3. Compound-carriage flame-cutting machine according to Claim 1 or 2, characterised in that the second control switches (26, 27), with a remote-adjusting means (32) in between, which is integrated in the regulating device, are connected to the reference element (25) of the measuring circuit (30), and a control variable, in particular a control voltage, can be superimposed on the reference input by actuating the control switches (26, 27, 28).

4. Compound-carriage flame-cutting machine according to one of Claims 1 to 3, characterised in that the remote-adjusting means (32) has a logic element (33) whose inputs are connected to the control switches (26, 27, 28) and whose outputs are connected to a counter (34), and, when the second control switches (26, 27) are actuated, in each case a counting pulse is produced which sets the counter (34) up or down, which, with a digital-to-analog converter (39), which is connected to the reference element (25) in between, then transmits the control variable, which displaces the zero point of the reference element (25) to plus or minus.

5. Compound-carriage flame-cutting machine according to one of Claims 1 to 4, characterised in that the digital-to-analog converter (39) is connected to a display unit (47, 48), in particular light-emitting diodes, which displays the displacement of the zero point to plus or minus.

6. Compound-carriage flame-cutting machine according to one of Claims 1 to 5, characterised in that a first switch (42, 43) is arranged between the digital-to-analog converter (39) and reference element (25), with which first switch (42, 43) the remote-adjusting means (32) can be separated from the capacitive regulating device (44), and a second switch (42, 45) can be operated which resets the counter (34) and the display unit (47, 48).

7. Compound-carriage flame-cutting machine according to one of Claims 1 to 6, characterised in that the control variable is increased or reduced as a function of the height of the sensor (19) from the workpiece (15) so that a smaller height correction is made at a decreasing distance h per counting pulse.

8. Compound-carriage flame-cutting machine according to one of Claims 1 to 7, characterised in that, with a logic element (33) in between, the first control switch (28) is connected to the counter (34) and by actuation clears the counter pulse input (37) of the counter (34).

**Revendications**

1. Machine d'oxycoupage à chariot croisé (10), comprenant un chariot longitudinal (12) mobile sur un chemin de roulement (11) et dont la poutre (13) porte une installation de régulation (44) pour régler la hauteur de la torche, l'installation de régulation (44) ayant un capteur (19) relié à un circuit de mesure, capteur qui détecte les variations de hauteur de la torche (18), ces variations étant comparées à une valeur de consigne réglée par un générateur de valeur de consigne (25) et les déviations de hauteur ainsi fournies étant transmises à un régulateur (22) qui, en fonction de cela, fournit des signaux de positionnement à un organe de réglage (24) entraînant la torche (18), et un tableau de commande (29) pour commander la hauteur de la torche, ce tableau étant monté de préférence sur le chariot longitudinal (12), le tableau comportant un premier bouton de commande (28) pour ouvrir ou fermer la liaison entre le circuit de mesure et l'organe de régulation (24) et un second bouton (26, 27) relié à l'organe de réglage et qui, en fonction des grandeurs guides, notamment de la durée de leur actionnement, génère des grandeurs de réglage qui sont fournies à l'organe de réglage (24) et celui-ci déplace en hauteur, de façon correspondante, la torche (18), machine caractérisée en ce que les boutons de commande (26, 27, 28) du tableau de commande (29) sont prévus pour la télécommande de la valeur de consigne.

2. Machine d'oxycoupage à chariot croisé selon la revendication 1, caractérisée en ce que les boutons (26, 27, 28) sont des touches.

3. Machine d'oxycoupage à chariot croisé selon la revendication 1 ou 2, caractérisée en ce que les seconds boutons (26, 27) sont reliés au générateur de valeur de consigne (25) du circuit de mesure (30) avec interposition d'un moyen de réglage télécommandé (32) intégré à l'installation de régulation, et par actionnement des boutons (26, 27, 28) on ajoute à la valeur de consigne une grandeur de commande en particulier une tension de commande.

4. Machine d'oxycoupage à chariot croisé selon l'une des revendications 1 à 3, caractérisée en ce que le moyen de réglage télécommandé (32) comprend un élément logique (33) dont les entrées sont reliées aux boutons de commande (26, 27, 28) et dont les sorties sont reliées à un compteur (34) et lorsqu'on actionne le second bouton (26, 27) on génère chaque fois une impulsion de comptage qui fait avancer ou reculer le compteur (34), et qui fournit alors par l'intermédiaire d'un convertisseur numérique/analogique (39) relié au générateur de valeur de consigne (25) une grandeur de commande, qui déplace le point zéro du générateur de valeur de consigne (25) dans le sens positif ou négatif.

5. Machine d'oxycoupage à chariot croisé selon l'une des revendications 1 à 4, caractérisée en ce que le convertisseur numérique/analogique (39) est relié à une unité d'affichage (47, 48) comportant notamment des diodes électroluminescentes et qui indique le déplacement du point zéro dans le sens positif ou négatif.

6. Machine d'oxycoupage à chariot croisé selon l'une des revendications 1 à 5, caractérisée par un premier commutateur (42, 43) prévu entre le convertisseur numérique/analogique (39) et le générateur de valeur de consigne (25), par lequel le moyen de réglage télécommandé (32) peut être coupé de l'installation de régulation capacitive (44) et par un second bouton (42, 45) qui peut être branché et qui efface le compteur (34) et le dispositif d'affichage (47, 48).

7. Machine d'oxycoupage à chariot croisé selon l'une des revendications 1 à 6, caractérisée en ce qu'on augmente ou diminue les grandeurs de commande en fonction de la hauteur du capteur (19) par rapport à la pièce (15) pour que, lorsque la distance h diminue, la correction de hauteur soit plus faible pour une impulsion de comptage.

8. Machine d'oxycoupage à chariot croisé selon l'une des revendications 1 à 7, caractérisée en ce que le premier commutateur de commande (28) est relié au compteur (34) par l'intermédiaire de l'élément logique (33) et en ce que par son actionnement il libère l'entrée des impulsions de comptage (37) du compteur (34).

FIG.1

EP 0 268 803 B1

FIG.2